# EUROPÄISCHE PATENTSCHRIFT

(11) **EP 3 113 993 B1**
(45) Veröffentlichungstag und Bekanntmachung des Hinweises auf die Patenterteilung: **20.10.2021**
(21) Anmeldenummer: 15707156.4
(22) Anmeldetag: 03.03.2015
(51) Int. Cl.: B60T 13/66, B60T 7/12

(54) **VERFAHREN ZUR STEUERUNG EINER BREMSANLAGE EINES SCHIENENFAHRZEUGS**
METHOD FOR CONTROLLING A BREAKING SYSTEM OF A RAIL VEHICLE
PROCÉDÉ SERVANT À COMMANDER UN SYSTÈME DE FREINAGE D'UN VÉHICULE SUR RAILS

(30) Priorität: 05.03.2014 DE 102014102881
(43) Veröffentlichungstag der Anmeldung: 11.01.2017
(73) Patentinhaber: KNORR-BREMSE Systeme für Schienenfahrzeuge GmbH, 80809 München (DE)
(72) Erfinder: HERDEN, Marc-Oliver, 81377 München (DE); RAU, Rainer, 82538 Geretsried (DE); FIESSER, Klaus, 80935 München (DE)
(86) Internationale Anmeldenummer: PCT/EP2015/054363
(87) Internationale Veröffentlichungsnummer: WO 2015/132232

(56) Entgegenhaltungen:
- WO-A2-2013/034731
- CH-A5- 613 167
- DE-A1- 19 510 755

## Beschreibung

Die vorliegende Erfindung betrifft ein Verfahren zur Steuerung einer Bremsanlage eines Schienenfahrzeugs, wobei die Bremsanlage mehrere insbesondere über das Schienenfahrzeug verteilt angeordnete Bremseinrichtungen umfasst.

Die Transportkapazität eines schienengebundenen Transportsystems, insbesondere des öffentlichen Personennahverkehrs, hängt maßgeblich von dem Abstand ab, den zwei aufeinanderfolgende Schienenfahrzeuge jeweils voneinander einhalten müssen. Dieser Mindestabstand ist letztlich durch die nominellen Bremswege der Schienenfahrzeuge vorgegeben.

Zum Bremsen von Schienenfahrzeugen können unterschiedliche Arten von Bremsen verwendet werden. Regelmäßig werden kraftschlussabhängige Bremsen verwendet, die eine Bremskraft über den Rad-Schiene-Kontakt übertragen. Übersteigt die von einer Bremse auf ein Rad ausgeübte Kraft die von dem Rad auf die Schiene maximal übertragbare Haftreibungskraft, besteht die Gefahr, dass das Rad blockiert und ins Gleiten gerät. Dies führt zu einem längeren Bremsweg des Schienenfahrzeugs. Wird dabei der nominelle Haltpunkt der Fahrstrecke, an dem das Schienenfahrzeug zum Halten kommen soll, beispielsweise ein Bahnsteig, "überfahren", wird dies als Unterbremsen bezeichnet. Aus Sicherheitsgründen ist es daher bekannt, für derartige Fälle Durchrutschwege vorzusehen.

Um ein Blockieren einer Radachse zu vermeiden, verfügen Bremsanlagen von Schienenfahrzeugen mit pneumatisch gesteuerten Druckluftreibungsbremsen wie Klotz- und Scheibenbremsen meist über Gleitschutzvorrichtungen, mit denen ein Blockieren einer Radachse erkannt und in Reaktion hierauf ein Bremsdruck in einem Bremszylinder der der blockierenden Radachse zugeordneten Bremse verringert werden kann. Durch eine Gleitschutzregelung wird der verringerte Bremsdruck dabei derart geregelt, dass zu jedem Zeitpunkt der Kraftschluss zwischen den Rädern der Radachse und der Schiene möglichst maximal ist.

Dokument CH 613 167 A5 offenbart ein Bremssystem für ein Schienenfahrzeug mit Zahnradantrieb, das zwei unabhängig voneinander betätigbare Federspeicherbremsen und eine in Abhängigkeit von einer Bremsverzögerung gesteuerte gemeinsame Drosselstelle für beide Federspeicherbremsen aufweist. Die Drosselstelle verkleinert einen Drosselquerschnitt eines Drosselorgans soweit, dass sich eine konstante Bremskraft einstellt, wenn ein für eine durch das Bremsen eintretende Verzögerung bestimmter Sollwert erreicht wird.

Das Dokument DE 195 10 755 A1 zeigt eine Einrichtung zur Erfassung und Überwachung der Bremswirkung eines schienengebundenen Triebfahrzeugs bei einer Notbremsung. Die Einrichtung steuert bei einem Notbremsversagen, wenn eine Bremswirkung bei einer Notbremsung zu gering ist, die einzelnen Bremssysteme individuell an.

Im Dokument WO 2013/034731 ist eine Bremskrafterfassung von verschiedenen individuell ansteuerbaren Bremseinrichtungen eines Bremssystems eines Schienenfahrzeugs offenbart.

Zur Kompensation der durch den verringerten Bremsdruck reduzierten Bremskraft ist es denkbar, eine andere pneumatisch gesteuerte Druckluftreibungsbremse, die einer anderen Radachse zugeordnet ist, mit einem entsprechend höheren Bremsdruck zu betätigen. Allerdings ist hierbei nicht sichergestellt, dass die andere Radachse die mit dem höheren Bremsdruck grundsätzlich verbundene höhere Bremskraft der anderen Druckluftreibungsbremse auch tatsächlich auf die Schiene übertragen kann.

Der Erfindung liegt die Aufgabe zugrunde, ein Verfahren der eingangs genannten Art anzugeben, das es ermöglicht, ein Unterbremsen eines Schienenfahrzeugs möglichst sicher zu vermeiden.

Diese Aufgabe wird durch ein Verfahren mit den Merkmalen des Anspruchs 1 gelöst, und insbesondere dadurch, dass bei einer Bremsung die Verzögerung des Schienenfahrzeugs mittels einer mit den Bremseinrichtungen verbundenen gemeinsamen Bremsregelungseinrichtung durch eine entsprechende variable und insbesondere aufeinander abgestimmte Ansteuerung der Bremseinrichtungen auf eine Sollwertvorgabe geregelt wird. Insbesondere wird eine Ist-Verzögerung des Schienenfahrzeugs erfasst, durch insbesondere fortlaufenden Vergleich der Ist-Verzögerung mit der Sollwertvorgabe eine Regelabweichung bestimmt und die Ansteuerung der Bremseinrichtungen derart angepasst, dass der Abweichung der Ist-Verzögerung von der Sollwertvorgabe entgegengewirkt wird.

Hierdurch kann ein zielpunktgenaues Bremsen erreicht werden. Neben einem Unterbremsen, das zu einem Auffahren auf ein vorausfahrendes Fahrzeug führen kann, kann auch ein Überbremsen des Schienenfahrzeugs, das zu einem Auffahren eines Folgefahrzeugs führen kann, vermieden werden. Toleranzen des Bremswegs, die sich aus Bremsdrucktoleranzen einer Gleitschutzregelung, Bremskrafttoleranzen eines Reibkontakts zwischen einem Bremsbelag und einer Bremsscheibe, Bremswirkungstoleranzen aufgrund variierendem Reibwert am Rad-Schiene-Kontakt je nach Witterung, Rad- und Schienenzustand und/oder aerodynamischen Einflüssen ergeben, können durch eine insbesondere schienenfahrzeugweite Regelung ausgeglichen werden.

Bei der Regelung kann eine kontinuierliche Anpassung der Bremskraft und/oder der Bremswirkung der einzelnen Bremseinrichtungen an sich während der Bremsung verändernde Randbedingungen, insbesondere Umgebungsbedingungen, erfolgen. Durch die Bremsregelungseinrichtung kann das Schienenfahrzeug auch bei z.B. unterschiedlicher bzw. wechselnder Adhäsion am Rad-Schiene-Kontakt und/oder bei einem Bremssystemausfall oder sonstigen Fehlern der Bremseinrichtungen möglichst genau zum Stehen gebracht werden. Ein Unter- oder Überbremsen kann vermieden werden. Insbesondere kann der Mindestabstand zwischen zwei aufeinanderfolgenden Schienenfahrzeugen, insbesondere im Bereich des öffentlichen Personennahverkehrs, minimiert werden. Bei einer bloßen Steuerung hingegen kann allenfalls eine Reaktion auf ein Kraftschlussmangelsignal einer einer Bremseinrichtung zugeordneten Gleitschutzvorrichtung erfolgen, derart, dass der Bremsdruck einer anderen Bremseinrichtung erhöht oder eine andere Bremseinrichtung zugeschaltet wird, um weiterhin möglichst gut zu bremsen. Dabei kann es vorkommen, dass die durch den mangelnden Kraftschluss nicht auf die Schienen übertragbare Bremskraft der einen Bremseinrichtung durch die erhöhte oder zusätzliche Bremskraft der anderen Bremseinrichtung überkompensiert wird, so dass ein ungewolltes Überbremsen resultiert, wobei diese Gefahr insbesondere dann existiert, wenn sich der Kraftschluss während der Bremsung aufgrund einer sich wieder verbessernden Adhäsion am Rad-Schiene-Kontakt wieder erhöht.

Ein Schienenfahrzeug kann einen oder mehrere Wagen, jeweils mit oder ohne eigenen Antrieb, umfassen. Das Schienenfahrzeug kann zumindest ein Triebfahrzeug und mehrere Wagons umfassen. An einem Wagen können ein oder mehrere Drehgestelle vorgesehen sein, an denen jeweils ein oder mehrere Radachsen vorgesehen sein können, an denen jeweils zwei insbesondere starr miteinander verbundene Räder angebracht sein können. Insbesondere sind die Bremseinrichtungen zu einem schienenfahrzeugweiten Verbund vernetzt. Die Bremseinrichtungen werden von der gemeinsamen Bremsregelungseinrichtung angesteuert.

Bevorzugt umfassen die Bremseinrichtungen verschiedene Bremssystem-Arten, bei denen es sich um wenigstens eine pneumatische Bremse, wenigstens eine generatorische Bremse, wenigstens eine hydraulische Bremse, wenigstens eine Wirbelstrombremse, wenigstens eine Magnetschienenbremse und/oder wenigstens eine Partikelstreueinrichtung, insbesondere eine Sandungseinrichtung, handeln kann. Bei den Bremseinrichtungen handelt es sich insbesondere um Einrichtungen, mit denen jeweils eine Bremskraft, insbesondere auf gleiche Art, erzeugbar oder eine Bremswirkung einer Bremskraft erhöhbar ist. Bei einer pneumatischen Bremse bzw. Druckluftbremse handelt es sich insbesondere um eine Druckluftreibungsbremse, beispielsweise um eine Scheiben- oder Klotzbremse. Insbesondere ist eine auf das Schienenfahrzeug wirkende Gesamtbremskraft die Summe der von allen wirkenden Bremseinrichtungen und gegebenenfalls bremsenden Effekten bereitgestellten einzelnen Bremskräfte.

Die translatorische Verzögerung bzw. negative Beschleunigung des Schienenfahrzeugs kann durch beliebige Sensoren wie beispielsweise Beschleunigungsmesser oder Kraftmesser, Dehnungsmessstreifen oder dergleichen erfasst werden. Die Verzögerung kann direkt gemessen oder beispielsweise aus Geschwindigkeit und Zeit berechnet werden. Das Ansteuern einer Bremseinrichtung kann ein Versorgen mit einem bestimmten Bremsdruck oder Bremsstrom und/oder ein Ansteuern derart bedeuten, dass eine bestimmte Betätigungskraft ausgeübt wird. Ein Ansteuern erfolgt durch die für die Bremseinrichtungen gemeinsame Bremsregelungseinrichtung. Beispielsweise kann die Bremsregelungseinrichtung dazu ausgebildet sein, elektrisch ansteuerbare Ventileinrichtungen einer Bremseinrichtung derart anzusteuern, dass einem oder mehreren pneumatischen Zylindern jeweils ein bestimmter Bremsdruck zugeführt wird. Da die Bremseinrichtungen in eine von der Bremsregelungseinrichtung insbesondere automatisch durchgeführte Regelung eingebunden sind, erfolgt die Ansteuerung variabel, insbesondere zeitlich veränderbar bzw. variierbar. Eine variable Ansteuerung kann eine Ein-/AusSteuerung, eine stufenweise Steuerung und/oder eine kontinuierliche Steuerung bedeuten.

Die Sollwertvorgabe kann einem konstanten Verzögerungssollwert oder einem zeitabhängigen Verzögerungssollwertverlauf entsprechen. Die Sollwertvorgabe kann beispielsweise von extern an die Bremsregelungseinrichtung bereitgestellt werden, beispielsweise durch entsprechende Eingabe eines Zugführers oder durch eine übergeordnete oder nebengeordnete Steuereinrichtung.

Insbesondere steuert die gemeinsame Bremsregelungseinrichtung bei einer einer Überbremsung entsprechenden Regelabweichung bzw. Regeldifferenz zwischen Ist-Verzögerung und Sollwertvorgabe die Bremseinrichtungen derart, dass eine durch die Bremseinrichtungen erzeugte Gesamtbremskraft reduziert wird. Zur Reduzierung der Gesamtbremskraft kann eine Bremskraft wenigstens einer Bremseinrichtung reduziert werden. Zur Reduzierung der Gesamtbremskraft kann ein Bremsdruck wenigstens einer bremsdruckabhängigen Bremseinrichtung reduziert werden.

Zur Reduzierung der Gesamtbremskraft kann auch wenigstens eine bislang betätigte Bremseinrichtung abgeschaltet werden. Insbesondere können zur Reduzierung der Gesamtbremskraft eine oder mehrere bislang betätigte Schienenbremsen, insbesondere Magnetschienenbremsen, abgeschaltet werden, so dass nur noch von einem Rad-Schiene-Kontakt abhängige Bremseinrichtungen betätigt werden. Zur Reduzierung der Gesamtbremskraft kann auch eine Bremswirkung wenigstens einer der Bremseinrichtungen reduziert werden. Insbesondere kann zur Reduzierung der Bremswirkung wenigstens eine Partikelstreueinrichtung, insbesondere eine Sandungseinrichtung, abgeschaltet werden.

Insbesondere steuert die gemeinsame Bremsregelungseinrichtung bei einer einer Unterbremsung entsprechenden Regelabweichung bzw. Regeldifferenz zwischen Ist-Verzögerung und Sollwertvorgabe die Bremseinrichtungen derart, dass die durch die Bremseinrichtungen erzeugte Gesamtbremskraft erhöht wird. Zur Erhöhung der Gesamtbremskraft kann eine Bremskraft wenigstens einer Bremseinrichtung erhöht werden. Zur Erhöhung der Gesamtbremskraft kann ein Bremsdruck wenigstens einer bremsdruckabhängigen Bremseinrichtung erhöht werden.

Zur Erhöhung der Gesamtbremskraft kann auch wenigstens eine bislang unbetätigte Bremseinrichtung zugeschaltet werden. Insbesondere kann zur Erhöhung der Gesamtbremskraft zu bereits betätigten, von einem Rad-Schiene-Kontakt abhängigen Bremseinrichtungen wenigstens eine bislang unbetätigte, von einem Rad-Schiene-Kontakt unabhängige Bremseinrichtung, insbesondere Schienenbremse, insbesondere Magnetschienenbremse, zugeschaltet werden. Zur Erhöhung der Gesamtbremskraft kann auch eine Bremswirkung wenigstens einer der Bremseinrichtungen erhöht werden. Insbesondere kann zur Erhöhung der Bremswirkung bzw. zur Adhäsionsverbesserung zwischen Rad und Schiene wenigstens eine Partikelstreueinrichtung, insbesondere eine Sandungseinrichtung, und/oder eine Schienenbremse, insbesondere eine Magnetschienenbremse, zur Reinigung der Schiene zugeschaltet werden.

Die Bremseinrichtungen können zumindest eine von der gemeinsamen Bremsregelungseinrichtung gesteuerte, von einem Rad-Schiene-Kontakt unabhängige Bremseinrichtung, insbesondere eine Schienenbremse, insbesondere eine Magnetschienenbremse, umfassen und/oder in verschiedene Bremssystem-Arten unterteilt sein und die gemeinsame Bremsregelungseinrichtung kann die Bremseinrichtungen derart steuern, dass bei der Bremsung wenigstens eine Bremseinrichtung einer bislang unbetätigten Bremssystem-Art, insbesondere eine Schienenbremse, insbesondere eine Magnetschienenbremse oder einer Partikelstreuanlage, zugeschaltet und insbesondere im Ein-/Aus-Verfahren, stufenweise und/oder kontinuierlich gesteuert wird. Beispielsweise kann bei einem bei einer von einem Rad-Schiene-Kontakt abhängigen Bremseinrichtung auftretenden Kraftschlussmangelsignal eine von einem Rad-Schiene-Kontakt und damit zumindest im Wesentlichen von Umgebungsbedingungen wie Laub, Nässe, Eis und/oder Schnee unabhängige Bremseinrichtung, insbesondere eine Schienenbremse, insbesondere eine Magnetschienenbremse, zugeschaltet werden.

Es kann auch vorgesehen sein, dass die gemeinsame Bremsregelungseinrichtung die Bremseinrichtungen derart steuert, dass eine Verteilung, insbesondere Umverteilung, der Gesamtbremskraft auf die Bremseinrichtungen derart erfolgt, dass zumindest einige der Bremseinrichtungen unterschiedlich und/oder individuell angesteuert werden. Dies umfasst auch, dass mehrere Bremseinrichtungen, beispielsweise die Bremseinrichtungen einer Radachse, eines Drehgestells oder eines Wagens, insbesondere einer jeweiligen Bremssystem-Art, gleich angesteuert werden. Grundsätzlich ist es jedoch auch möglich, dass alle Bremseinrichtungen, insbesondere einer jeweiligen Bremssystem-Art, des Schienenfahrzeugs gemeinsam und/oder gleich angesteuert werden. Eine individuelle Ansteuerung bedeutet, dass die Bremseinrichtungen nicht gemeinsam angesteuert werden, wobei eine unterschiedliche, teilweise unterschiedliche und/oder gleiche Ansteuerung der Bremseinrichtungen möglich ist. Beispielsweise können an jedem Wagen eines Schienenfahrzeugs eine oder mehrere Schienenbremsen, insbesondere Magnetschienenbremsen, vorgesehen sein, wobei bei einem Kraftschlussmangelsignal an einer oder mehreren von einem Rad-Schiene-Kontakt abhängigen Bremseinrichtungen die Schienenbremsen aller Wagen gleichzeitig zugeschaltet und gemeinsam oder zumindest teilweise individuell angesteuert werden.

Gemäß einer Ausführung kann das Schienenfahrzeug mehrere Wagen umfassen und die Bremseinrichtungen können über die Wagen verteilt angeordnet sein, wobei die gemeinsame Bremsregelungseinrichtung die Bremseinrichtungen derart steuert, dass bei der Bremsung eine Reduktion einer auf einen Wagen einwirkenden Bremskraft mit einer Erhöhung einer auf einen anderen Wagen einwirkenden Bremskraft einhergeht. Die Gesamtbremskraft kann bei einer Bremsung durch die Regelung über die Wagengrenzen hinweg umverteilt werden.

Die gemeinsame Bremsregelungseinrichtung kann die Bremseinrichtungen derart steuern, dass eine insbesondere schienenfahrzeugweite Verteilung, insbesondere Umverteilung, der Gesamtbremskraft auf die Bremseinrichtungen, insbesondere auf verschiedene Bremssystem-Arten und/oder auf verschiedene Wagen des Schienenfahrzeugs, in Abhängigkeit von von den Bremseinrichtungen empfangenen statusanzeigenden Meldungen, insbesondere Rückmeldungen, bzw. Statussignalen, der Geschwindigkeit und/oder der Masse des Schienenfahrzeugs, der Regulierbarkeit, des Ansprechverhaltens und/oder des Verschleißverhaltens der Bremseinrichtungen erfolgt. Hierdurch können neben einem mangelhaften Kraftschluss an einem Rad-Schiene-Kontakt auch weitere Ursachen für ein Abweichen der Ist-Verzögerung von der Sollwertvorgabe ermittelt werden. Die statusanzeigenden Meldungen können einen Fehler und/oder Ausfall der jeweiligen Bremseinrichtung und/oder einen Wert für eine von einer jeweiligen Bremseinrichtung aktuell ausgeübte und/oder maximal übertragbare Bremskraft umfassen. Es kann jeweils eine bidirektionale Kommunikationsverbindung zwischen der Bremsregelungseinrichtung und den Bremseinrichtungen ausgebildet sein. Darüber hinaus können typische, sich von Bremssystem zu Bremssystem unterscheidende Charakteristika der einzelnen Bremssystem-Arten, wie Regulierbarkeit, Ansprechverhaltens und Verschleißverhalten, bei der jeweiligen Auswahl der für eine jeweilige Bremsung und die Regelung auf die Verzögerung des Schienenfahrzeugs benötigten Bremssysteme berücksichtigt werden.

Die Erfindung betrifft auch eine Bremsregelungseinrichtung für eine Bremsanlage eines Schienenfahrzeugs, die zur Durchführung des vorstehend beschriebenen Verfahrens eingerichtet ist.

Die Erfindung betrifft weiterhin eine Bremsanlage für ein Schienenfahrzeug mit mehreren Bremseinrichtungen und einer wie vorstehend beschriebenen Bremsregelungseinrichtung.

Die Erfindung betrifft ferner ein Schienenfahrzeug mit einer wie vorstehend beschriebenen Bremsanlage.

Weitere vorteilhafte Ausgestaltungen der Erfindung sind in den Unteransprüchen, der weiteren Beschreibung und der Zeichnung beschrieben.

Die Erfindung wird im Folgenden beispielhaft unter Bezugnahme auf die Zeichnung beschrieben. Es zeigen,
- Fig. 1: schematisch ein Schienenfahrzeug mit einer Bremsanlage und einer gemeinsamen Bremsregelungseinrichtung, und
- Fig. 2: schematisch ein Schienenfahrzeug auf einer Fahrstrecke mit nominellem Haltepunkt.

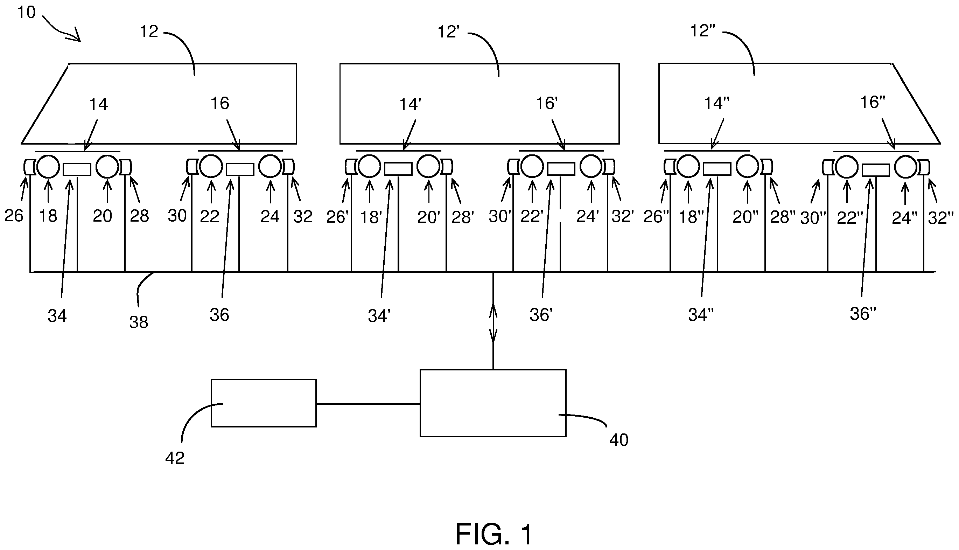

Fig. 1 zeigt ein Schienenfahrzeug 10, das mehrere Wagen 12, 12', 12" aufweist. Jeder Wagen weist zwei Drehgestelle 14, 16, 14', 16', 14", 16" auf. Jedes Drehgestell ist mit zwei Radachsen 18, 20, 22, 24, 18', 20', 22', 24', 18", 20", 22", 24" versehen. Jeder Radachse ist eine Bremseinrichtung in Form einer pneumatischen Reibungsbremse 26, 28, 30, 32, 26', 28', 30', 32', 26", 28", 30", 32" zugeordnet. Zusätzlich ist jedem Drehgestell eine Bremseinrichtung in Form einer Magnetschienenbremse 34, 36, 34', 36', 34", 36" zugeordnet, die zwischen den beiden jeweiligen Radachsen angeordnet ist. Die Reibungsbremsen sind einer ersten Bremssystem-Art zugehörig, die Magnetschienenbremsen sind einer zweiten Bremssystem-Art zugehörig.

Die Reibungsbremsen und die Magnetschienenbremsen bilden zusammen eine Bremsanlage des Schienenfahrzeugs 10. Mittels der Bremseinrichtungen, die über die Wagen 12, 12',12" des Schienenfahrzeugs 10 verteilt angeordnet sind, kann jeweils eine Bremskraft auf das Schienenfahrzeug 10 erzeugt werden. Die Bremskraft der Reibungsbremsen ist abhängig von dem Kraftschluss an einem Rad-Schiene-Kontakt, die Bremskraft der Magnetschienenbremsen ist unabhängig von einem Kraftschluss an einem Rad-Schiene-Kontakt. Lediglich der Einfachheit halber wird davon ausgegangen, dass keine weiteren Bremssystem-Arten vorgesehen sind und dass bei einer Betriebsbremsung lediglich die pneumatischen Reibungsbremsen und bei einer Schnellbremsung zusätzlich die Magnetschienenbremsen zum Einsatz kommen. Grundsätzlich können anstelle zumindest einer der beiden beschriebenen Bremssystem-Arten bzw. -Typen auch eine oder mehrere andere Bremssystem-Arten bzw. -Typen wie eine Generatorbremse oder eine Wirbelstrombremse zum Einsatz kommen.

Die pneumatischen Reibungsbremsen umfassen in bekannter Weise jeweils einen Bremszylinder (nicht dargestellt) und ein an einer Hauptdruckleitung angeschlossenes Steuerventil (nicht dargestellt), um den Bremszylinder mit einem jeweiligen Bremsdruck zu beaufschlagen. Darüber hinaus ist jedem Drehgestell 14, 16, 14', 16', 14", 16" jeweils eine Gleitschutzeinrichtung (nicht dargestellt) zugeordnet. Die Gleitschutzeinrichtungen weisen in bekannter Weise jeweils eine Gleitschutzregelung und einen mit der Gleitschutzregelung verbundenen Raddrehzahlsensor auf, um im Falle eines Kraftschlussmangels zwischen Rad und Schiene ein jeweiliges Entlüftungsventil derart anzusteuern, dass der Bremsdruck auf die Bremszylinder der pneumatischen Reibungsbremsen des jeweiligen Drehgestells reduziert wird.

Darüber hinaus ist eine elektronische Bremsregelungseinrichtung 40 vorgesehen, die in einem der Wagen 12, 12', 12" des Schienenfahrzeugs 10 angeordnet ist. Die Bremsregelungseinrichtung 40 ist dazu ausgelegt, bei einer Bremsung die dadurch verursachte translatorische Verzögerung des Schienenfahrzeugs 10 durch entsprechende Ansteuerung der Bremseinrichtungen automatisch auf eine Sollwertvorgabe bzw. einen vorgegebenen Sollwert zu regeln. In der Regel wird es sich bei der Sollwertvorgabe um eine zeitabhängige nominelle Verzögerungskennlinie handeln. Hierzu ist die Bremsregelungseinrichtung 40 mit einer Ist-Verzögerungserfassungseinrichtung 42 und mit allen Bremseinrichtungen der Bremsanlage verbunden. Bei der Bremsregelungseinrichtung 40 handelt es sich daher um eine für alle Bremseinrichtungen der Bremsanlage gemeinsame Einrichtung.

Bei der Einrichtung 42 handelt es sich um eine Einrichtung, mit der die Ist-Verzögerung des Schienenfahrzeugs 10, insbesondere bei einer Bremsung, ermittelt werden kann. Bei der Einrichtung 42 kann es sich um einen Sensor handeln, mit dem die Ist-Verzögerung direkt gemessen wird, oder um eine Einrichtung, mit der es möglich ist, anhand entsprechender Eingangssignale, z.B. Geschwindigkeit und Zeit, eine Ist-Verzögerung des Schienenfahrzeugs 10 zu berechnen.

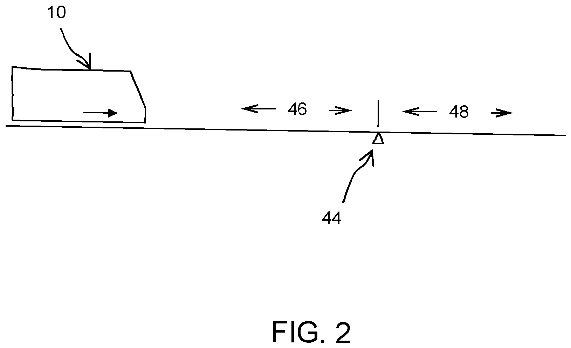

Durch die Regelung der Verzögerung 10 kann erreicht werden, dass das Schienenfahrzeug 10 einen vorgegebenen Bremsweg nach Einleitung einer Bremsung auch bei schlechten oder variierenden Kraftschluss- bzw. Reib- oder Adhäsionsbedingungen zwischen Rad und Schiene, insbesondere auch von Rad zu Rad, tatsächlich einhält und zielpunktgenau an einen nominellen Haltepunkt 44, wie er in Fig. 2 dargestellt ist, zum Stehen kommen kann. Damit kann die Gefahr sowohl eines Überbremsens 46, bei dem der Bremsweg kürzer als nominell vorgegeben ist, als auch eines Unterbremsens 48, bei dem das Fahrzeug 10 einen zu langen Bremsweg benötigt, vermieden werden. Ein Auffahren eines Folgefahrzeugs oder ein Auffahren auf ein vorausfahrendes Fahrzeug kann dadurch wirksam vermieden werden. Insbesondere können die Abstände zwischen zwei jeweils aufeinanderfolgenden Schienenfahrzeugen minimiert werden.

Stellt die Bremsregelungseinrichtung 40 während der Bremsung fest, dass die Regelabweichung zwischen der erfassten Ist-Verzögerung und der Sollwertvorgabe einer Überbremsung entspricht, wird die Bremsanlage derart angesteuert, dass die durch die Bremseinrichtungen erzeugte und auf das Schienenfahrzeug 10 insgesamt einwirkende Gesamtbremskraft reduziert wird. Dies kann bei einer Betriebsbremsung dadurch erfolgen, dass der auf die pneumatischen Reibungsbremsen einwirkende Bremsdruck verringert wird. Dies kann bei allen pneumatischen Reibungsbremsen oder einem Teil dieser Bremsen erfolgen.

Stellt die Bremsregelungseinrichtung 40 während der Bremsung hingegen fest, dass die Regelabweichung zwischen der erfassten Ist-Verzögerung und der Sollwertvorgabe einer Unterbremsung entspricht, wird die Bremsanlage derart angesteuert, dass die durch die Bremseinrichtungen erzeugte und auf das Schienenfahrzeug 10 insgesamt einwirkende Gesamtbremskraft erhöht wird. Dies kann bei einer Betriebsbremsung dadurch erfolgen, dass der auf die pneumatischen Reibungsbremsen einwirkende Bremsdruck erhöht wird. Dies kann bei allen pneumatischen Reibungsbremsen oder einem Teil dieser Bremsen erfolgen. Es ist jedoch auch möglich, dass zur Erhöhung der Gesamtbremskraft eine oder mehrere der Magnetschienenbremsen zugeschaltet werden.

Eine Erhöhung der Gesamtbremskraft ist auch dann erforderlich, wenn bei einer Betriebsbremsung die durch die pneumatischen Reibungsbremsen auf die Schiene übertragbare Bremskraft zumindest für einen Teil der pneumatischen Reibungsbremsen aufgrund eines mangelnden Kraftschlusses zwischen Rad und Schiene zurückgegangen ist und dieser Rückgang nicht durch Erhöhung des Bremsdrucks der nicht betroffenen pneumatischen Reibungsbremsen kompensiert werden kann. In einem derartigen Fall wird dann ebenfalls zumindest eine von einem Rad-Schiene-Kontakt unabhängige, bei der Betriebsbremsung bislang unbetätigte Magnetschienenbremse zugeschaltet und variabel gesteuert, insbesondere im Ein-/Aus-Verfahren, um den vorgenannten Rückgang zu kompensieren.

Grundsätzlich ist es möglich, dass bei der Regelung der Gesamtbremskraft - unter Berücksichtigung der Geschwindigkeit und/oder der Masse des Schienenfahrzeugs und der Regulierbarkeit, des Ansprechverhaltens und/oder und des Verschleißverhaltens der beiden Bremssystem-Arten - die Verteilung der Gesamtbremskraft auf die beiden Bremssystem-Arten variiert wird.

Darüber hinaus kann auch die Verteilung der Gesamtbremskraft innerhalb des Schienenfahrzeugs, insbesondere auf die verschiedenen Wagen 12, 12', 12", variiert werden, was z.B. dann der Fall sein kann, wenn eine Bremseinrichtung eines Wagens 12, 12', 12" ausfällt, einem sonstigen Fehler unterliegt und/oder die vorgesehene Bremskraft nicht aufbringen kann. Es ist daher bevorzugt, wenn die Bremseinrichtungen dazu eingerichtet sind, statusanzeigende Meldungen an die Bremsregelungseinrichtung 40 zu übermitteln, so dass es der Bremsregelungseinrichtung 40 möglich ist, die Ursache für ein Abweichen der Ist-Verzögerung von der Sollwertvorgabe zu ermitteln und entsprechend darauf zu reagieren. Dies ist in Fig. 1 durch eine bidirektionale Kommunikationsverbindung zwischen der Bremsregelungseinrichtung 40 und den Bremseinrichtungen verdeutlicht.

Durch die kontinuierliche Regelung der Verzögerung des Schienenfahrzeugs auf eine Sollwertvorgabe kann eine Bremsung auf einen vorgegebenen Haltepunkt hin besonders genau erfolgen.

### Bezugszeichenliste

- 10: Schienenfahrzeug
- 12, 12', 12": Wagen
- 14, 14', 14": Drehgestell
- 16, 16', 16": Drehgestell
- 18, 18', 18": Radachse
- 20, 20', 20": Radachse
- 22, 22', 22": Radachse
- 24, 24', 24": Radachse
- 26, 26', 26": pneumatische Reibungsbremse
- 28, 28', 28": pneumatische Reibungsbremse
- 30, 30', 30": pneumatische Reibungsbremse
- 32, 32', 32": pneumatische Reibungsbremse
- 34, 24', 34": Magnetschienenbremse
- 36, 36', 36": Magnetschienenbremse
- 38: Kommunikationsverbindung
- 40: Bremsregelungseinrichtung
- 42: Ist-Verzögerungserfassungseinrichtung
- 44: nomineller Haltepunkt
- 46: Überbremsen
- 48: Unterbremsen

## Patentansprüche

1. Verfahren zur Steuerung einer Bremsanlage eines Schienenfahrzeugs (10) zur kontinuierlichen Regelung einer Verzögerung des Schienenfahrzeugs (10) auf eine Sollwertvorgabe, so dass ein vorgegebener Bremsweg nach Einleitung einer Bremsung eingehalten wird, wobei die Bremsanlage mehrere Bremseinrichtungen (26, 28, 30, 32, 34, 36) umfasst,
wobei
bei einer Bremsung die Verzögerung des Schienenfahrzeugs (10) mittels einer mit den Bremseinrichtungen (26, 28, 30, 32, 34, 36) verbundenen gemeinsamen Bremsregelungseinrichtung (40) durch eine entsprechende variable Ansteuerung der Bremseinrichtungen (26, 28, 30, 32, 34, 36) auf die Sollwertvorgabe geregelt wird, durch
eine Erfassung einer Ist-Verzögerung des Schienenfahrzeugs (10),
eine Bestimmung einer Regelabweichung durch einen fortlaufenden Vergleich der Ist-Verzögerung mit der Sollwertvorgabe, und
ein Anpassen der variablen aufeinander abgestimmten individuellen Ansteuerung der Bremseinrichtungen (26, 28, 30, 32, 34, 36) mittels der Bremsregeleinrichtung (40), so dass einer Abweichung der Ist-Verzögerung von der Sollwertvorgabe entgegengewirkt wird.

2. Verfahren nach Anspruch 1,
**dadurch gekennzeichnet,**
**dass** die Sollwertvorgabe einem konstanten Sollwert oder einem zeitabhängigen Sollwertverlauf entspricht.

3. Verfahren nach Anspruch 1 oder 2,
**dadurch gekennzeichnet,**
**dass** die gemeinsame Bremsregelungseinrichtung (40) bei einer einer Überbremsung entsprechenden Regelabweichung zwischen Ist-Verzögerung und Sollwertvorgabe die Bremseinrichtungen (26, 28, 30, 32, 34, 36) derart steuert, dass eine durch die Bremseinrichtungen (26, 28, 30, 32, 34, 36) erzeugte Gesamtbremskraft reduziert wird.

4. Verfahren nach Anspruch 3,
**dadurch gekennzeichnet,**
**dass** zur Reduzierung der Gesamtbremskraft ein Bremsdruck wenigstens einer bremsdruckabhängigen Bremseinrichtung (26, 28, 30, 32) reduziert wird.

5. Verfahren nach zumindest einem der vorstehenden Ansprüche,
**dadurch gekennzeichnet,**
**dass** die gemeinsame Bremsregelungseinrichtung (40) bei einer einer Unterbremsung entsprechenden Regelabweichung zwischen Ist-Verzögerung und Sollwertvorgabe die Bremseinrichtungen (26, 28, 30, 32, 34, 36) derart steuert, dass eine durch die Bremseinrichtungen erzeugte Gesamtbremskraft erhöht wird.

6. Verfahren nach Anspruch 5,
**dadurch gekennzeichnet,**
**dass** zur Erhöhung der Gesamtbremskraft zu bereits betätigten, von einem Rad-Schiene-Kontakt abhängigen Bremseinrichtungen (26, 28, 30, 32) wenigstens eine bislang unbetätigte, von einem Rad-Schiene-Kontakt unabhängige Bremseinrichtung (34, 36), insbesondere Schienenbremse, zugeschaltet wird.

7. Verfahren nach zumindest einem der vorstehenden Ansprüche,
**dadurch gekennzeichnet,**
**dass** die Bremseinrichtungen (26, 28, 30, 32, 34, 36) zumindest eine von der gemeinsamen Bremsregelungseinrichtung (40) gesteuerte, von einem Rad-Schiene-Kontakt unabhängige Bremseinrichtung (34, 36), insbesondere eine Schienenbremse, umfassen.

8. Verfahren nach zumindest einem der vorstehenden Ansprüche,
**dadurch gekennzeichnet,**
**dass** die Bremseinrichtungen (26, 28, 30, 32, 34, 36) in verschiedene Bremssystem-Arten unterteilt sind und die gemeinsame Bremsregelungseinrichtung (40) die Bremseinrichtungen (26, 28, 30, 32, 34, 36) derart steuert, dass bei der Bremsung wenigstens eine Bremseinrichtung (34, 36) einer bislang unbetätigten Bremssystem-Art, insbesondere eine Schienenbremse oder einer Partikelstreuanlage, zugeschaltet und insbesondere im Ein-/Aus-Verfahren, stufenweise und/oder kontinuierlich gesteuert wird.

9. Verfahren nach zumindest einem der vorstehenden Ansprüche,
**dadurch gekennzeichnet,**
**dass** die gemeinsame Bremsregelungseinrichtung (40) die Bremseinrichtungen (26, 28, 30, 32, 34, 36) derart steuert, dass eine Verteilung der Gesamtbremskraft auf die Bremseinrichtungen (26, 28, 30, 32, 34, 36) derart erfolgt, dass zumindest einige der Bremseinrichtungen (26, 28, 30, 32, 34, 36) unterschiedlich und/oder individuell angesteuert werden.

10. Verfahren nach zumindest einem der vorstehenden Ansprüche,
**dadurch gekennzeichnet,**
**dass** das Schienenfahrzeug (10) mehrere Wagen (12) umfasst und die Bremseinrichtungen (26, 28, 30, 32, 34, 36) über die Wagen (12) verteilt angeordnet sind, wobei die gemeinsame Bremsregelungseinrichtung (40) die Bremseinrichtungen (26, 28, 30, 32, 34, 36) derart steuert, dass bei der Bremsung eine Reduktion einer auf einen Wagen (12) einwirkenden Bremskraft mit einem Erhöhung einer auf einen anderen Wagen (12) einwirkenden Bremskraft einhergeht.

11. Verfahren nach zumindest einem der vorstehenden Ansprüche,
**dadurch gekennzeichnet,**
**dass** die gemeinsame Bremsregelungseinrichtung (40) die Bremseinrichtungen (26, 28, 30, 32, 34, 36) derart steuert, dass eine Verteilung der Gesamtbremskraft auf die Bremseinrichtungen (26, 28, 30, 32, 34, 36), insbesondere auf verschiedene Bremssystem-Arten und/oder auf verschiedene Wagen (12) des Schienenfahrzeugs (10), in Abhängigkeit von von den Bremseinrichtungen (26, 28, 30, 32, 34, 36) empfangenen statusanzeigenden Meldungen, der Geschwindigkeit und/oder der Masse des Schienenfahrzeugs (10), der Regulierbarkeit, des Ansprechverhaltens und/oder des Verschleißverhaltens der Bremseinrichtungen (26, 28, 30, 32, 34, 36) erfolgt.

12. Verfahren nach Anspruch 11,
**dadurch gekennzeichnet,**
**dass** die statusanzeigenden Meldungen einen Fehler und/oder Ausfall der jeweiligen Bremseinrichtung (26, 28, 30, 32, 34, 36) und/oder einen Wert für eine von einer jeweiligen Bremseinrichtung (26, 28, 30, 32, 34, 36) aktuell ausgeübte und/oder maximal übertragbare Bremskraft umfassen.

13. Bremsregelungseinrichtung (40) für eine Bremsanlage eines Schienenfahrzeugs (10), die zur Durchführung eines Verfahrens gemäß einem der Ansprüche 1 bis 12 eingerichtet ist.

14. Bremsanlage für ein Schienenfahrzeug (10) mit mehreren Bremseinrichtungen (26, 28, 30, 32, 34, 36) und einer Bremsregelungseinrichtung (40) nach Anspruch 13.

15. Schienenfahrzeug (10) mit einer Bremsanlage nach Anspruch 14.

## Claims

1. Method for controlling a brake system of a rail vehicle (10) for continuous adjustment of the deceleration of the rail vehicle (10) to a preset reference value so that a preset braking distance, after a braking operation has been initiated, is respected, the brake system comprising a plurality of braking devices (26, 28, 30, 32, 34, 36),
wherein the deceleration of the rail vehicle (10) in a braking operation by means of a shared brake control device (40) connected to the braking devices (26, 28, 30, 32, 34, 36) is adjusted through a corresponding variable activation of the braking devices (26, 28, 30, 32, 34, 36) to the preset reference value, by
detecting the actual deceleration of the rail vehicle (10).
determining a difference by means of continuous comparison of the actual deceleration with the preset reference value, and
adapting the variable individual activation operations of the braking devices (26, 28, 30, 32, 34, 36) tailored to one another by means of the brake control device (40) so that a difference in the actual deceleration from the preset reference value is counteracted.

2. Method according to claim 1,
**characterised in that**
the preset reference value corresponds to a constant reference value or a time-dependent reference value profile.

3. Method according to claim 1 or 2,
**characterised in that**
in the event of a difference between the actual deceleration and the preset reference value which corresponds to over-braking, the shared brake control device (40) controls the braking devices (26, 28, 30, 32, 34, 36) such that a total braking force produced by the braking devices (26, 28, 30, 32, 34, 36) is reduced.

4. Method according to claim 3,
**characterised in that**
to reduce the total braking force, the brake pressure of at least one brake-pressure-dependent braking device (26, 38, 30, 32) is reduced.

5. Method according to at least one of the preceding claims,
**characterised in that**
in the event of a difference between the actual deceleration and the preset reference value which corresponds to under-braking, the shared brake control device (40) controls the braking devices (26, 28, 30, 32, 34, 36) such that a total braking force produced by the braking devices is increased.

6. Method according to claim 5,
**characterised in that**
to increase the total braking force for already activated braking devices (26, 28, 30, 32) which are dependent on wheel-rail contact, at least one braking device (34, 36) not activated thus far, in particular a disc brake, is switched on.

7. Method according to at least one of the above claims,
**characterised in that**
the braking devices (26, 28, 30, 32, 34, 36) comprise at least one braking device (34, 36) controlled by the shared brake control device (40) and which does not depend on wheel-rail contact, in particular a disc brake.

8. Method according to at least one of the preceding claims,
**characterised in that**
the braking devices (26, 28, 30, 32, 34, 36) are subdivided into different brake system types, and the shared brake control device (40) controls the braking devices (26, 28, 30, 32, 34, 36) such that, in a braking operation, at least one braking device (34, 36) of a brake system type not activated thus far, in particular a rail brake or a particle dispersion system, is switched on and controlled in particular in the in/out process, in stages and/or continuously.

9. Method according to at least one of the preceding claims,
**characterised in that**
the shared brake control device (40) controls the braking devices (26, 28, 30, 32, 34, 36) so that a distribution of the total braking force to the braking devices (26, 28, 30, 32, 34, 36) is realised such that at least some of the braking devices (26, 28, 30, 32, 34, 36) are activated differently and/or individually.

10. Method according to at least one of the preceding claims,
**characterised in that**
the rail vehicle (10) comprises a plurality of carriages (12), and the braking devices (26, 28, 30, 32, 34, 36) are arranged distributed around the carriage (12), the shared brake control device (40) controlling the braking devices (26, 28, 30, 32, 34, 36) such that, in the braking operation, a reduction in a braking force acting on one carriage (12) goes hand in hand with an increase in a braking force acting on another carriage (12).

11. Method according to at least one of the preceding claims,
**characterised in that**
the shared brake control device (40) controls the braking devices (26, 28, 30, 32, 34, 36) such that a distribution of the total braking force to the braking devices (26, 28, 30, 32, 34, 36), in particular to different brake system types and / or different carriages (12) of the rail vehicle, is realised in dependence on the status-indicating messages received by the braking devices (26, 28, 30, 32, 34, 36), the speed and/or the mass of the rail vehicle (10), the adjustability, the reaction behaviour and/or the wear behaviour of the braking devices (26, 28, 30, 32, 34, 36).

12. Method according to claim 11,
**characterised in that**
the status-indicating messages include defect and/or failure of the braking device in question and/or a value for a braking force that is currently exerted by a respective braking device (26, 28, 30, 32, 34, 36) and/or its maximum transmissible braking force.

13. Brake control device (40) for a brake system of a rail vehicle (10) which is designed to carry out a method according to any of claims 1 to 12.

14. Brake system for a rail vehicle (10) having a plurality of braking devices (26, 28, 30, 32, 34, 36) and a brake control device (40) according to claim 13.

15. Rail vehicle (10) having a brake system according to claim 14.

## Revendications

1. Procédé de commande d'un système de frein d'un véhicule (10) ferroviaire pour la régulation continuelle d'une décélération du véhicule (10) ferroviaire jusqu'à une prescription de valeur de consigne de manière à maintenir une longueur d'arrêt donnée à l'avance après le commencement d'un freinage, le système de frein comprenant plusieurs dispositifs (26, 28, 30, 32, 34, 36) de frein,
dans lequel
lors d'un freinage, on régule à la prescription d'une valeur de consigne par une commande variable correspondante des dispositifs (26, 28, 30, 32, 34, 36) de frein la décélération du véhicule (10) ferroviaire au moyen d'un dispositif (40) commun de régulation de frein relié aux dispositifs (26, 28, 30, 32, 34, 36) de frein, par
une détection d'une décélération réelle du véhicule (10) ferroviaire,
une définition d'un écart de régulation par une comparaison continue de la décélération réelle à la prescription de valeur de consigne et
une adaptation de la commande individuelle adaptée l'une à l'autre de manière variable des dispositifs (26, 28, 30, 32, 34, 36) de frein au moyen du dispositif (40) de régulation de frein de manière à s'opposer à un écart de la décélération réelle à la prescription de valeur de consigne.

2. Procédé suivant la revendication 1,
**caractérisé**
**en ce que** la prescription de valeur de consigne correspond à une valeur de consigne constante ou à une courbe de valeur de consigne, qui dépend du temps.

3. Procédé suivant la revendication 1 ou 2,
**caractérisé**
**en ce que** le dispositif (40) commun de régulation de frein commande, lors d'un écart de régulation, correspondant à un sur-freinage, entre la décélération réelle et la prescription de valeur de consigne, les dispositifs (26, 28, 30, 32, 34, 36) de frein de manière à réduire une force de frein d'ensemble produite par les dispositifs (26, 28, 30, 32, 34, 36) de frein.

4. Procédé suivant la revendication 3,
**caractérisé**
**en ce que**, pour réduire la force de frein d'ensemble, on réduit une pression de frein d'au moins un dispositif (26, 28, 30, 32) de frein, qui dépend de la pression de frein.

5. Procédé suivant l'une au moins des revendications précédentes,
**caractérisé**
**en ce que** le dispositif (40) commun de régulation de frein commande, pour un écart de régulation, correspondant à un sous-freinage, entre la décélération réelle et la prescription de valeur de consigne, les dispositifs (26, 28, 30, 32, 34, 36) de frein de manière à augmenter une force d'ensemble de frein produite par les dispositifs de frein.

6. Procédé suivant la revendication 5,
**caractérisé**
**en ce que**, pour augmenter la force de frein d'ensemble, on branche, par rapport à des dispositifs (26, 28, 30, 32) de frein déjà actionnés et dépendant d'un contact roue-rail, au moins un dispositif (34, 36) de frein, notamment un frein de rail, non actionné jusqu'ici et indépendant d'un contact roue-rail.

7. Procédé suivant au moins l'une des revendications précédentes,
**caractérisé**
**en ce que** les dispositifs (26, 28, 30, 32, 34, 36) de frein comprennent au moins un dispositif (34, 36) de frein, notamment un frein de rail, commandé par le dispositif (40) commun de régulation de frein et indépendant d'un contact roue-rail.

8. Procédé suivant au moins l'une des revendications précédentes,
**caractérisé**
**en ce que** les dispositifs (26, 28, 30, 32, 34, 36) de frein sont subdivisés en divers types de systèmes de frein et le dispositif (40) commun de régulation de frein commande les dispositifs (26, 28, 30, 32, 34, 36) de frein de manière à brancher, lors du freinage, au moins un dispositif (26, 28, 30, 32, 34, 36) de frein d'un type de système de frein non actionné jusqu'ici, notamment un frein de rail, ou une installation de dispersion de particules, et à le commander notamment dans un procédé d'entrée/ sortie, par palier et/ou en continu.

9. Procédé suivant au moins l'une des revendications précédentes,
**caractérisé**
**en ce que** le dispositif (40) commun de régulation de frein commande les dispositifs (26, 28, 30, 32, 34, 36) de frein de manière à obtenir une répartition de la force d'ensemble de frein sur les dispositifs (26, 28, 30, 32, 34, 36) de frein de façon à ce qu'au moins certains des dispositifs (26, 28, 30, 32, 34, 36) de frein soient commandés différemment et/ou individuellement.

10. Procédé suivant au moins l'une des revendications précédentes,
**caractérisé**
**en ce que** le véhicule (10) ferroviaire comprend plusieurs voitures (12) et les dispositifs (26, 28, 30, 32, 34, 36) de frein sont répartis sur les voitures (12), dans lequel le dispositif (40) commun de régulation de frein commande les dispositifs (26, 28, 30, 32, 34, 36) de frein de manière à ce que, lors du freinage, une réduction d'une force de frein s'appliquant à une voiture (12) comporte une augmentation d'une force de frein s'appliquant à une autre voiture (12).

11. Procédé suivant au moins l'une des revendications précédentes,
**caractérisé**
**en ce que** le dispositif (40) commun de régulation de frein commande les dispositifs (26, 28, 30, 32, 34, 36) de frein de manière à obtenir une répartition de la force de frein d'ensemble sur les dispositifs (26, 28, 30, 32, 34, 36) de frein, notamment sur divers types de systèmes de frein et/ou sur diverses voitures (12) du véhicule (10) ferroviaire, en fonction de messages d'indication de statut reçus par les dispositifs (26, 28, 30, 32, 34, 36) de frein de la vitesse et/ou de la masse du véhicule (10) ferroviaire, de la possibilité de régulation du comportement de réaction et/ou du comportement à l'usure des dispositifs (26, 28, 30, 32, 34, 36) de frein.

12. Procédé suivant la revendication 11,
**caractérisé**
**en ce que** les messages d'indication du statut comprennent un défaut et/ou une défaillance du dispositif (26, 28, 30, 32, 34, 36) de frein respectif et/ou une valeur de la force de frein appliquée en cours par un dispositif (26, 28, 30, 32, 34, 36) de frein respectif et/ou pouvant être transmise au maximum.

13. Dispositif (40) de régulation de frein d'un système de frein d'un véhicule (10) ferroviaire, qui est conçu pour effectuer un procédé suivant l'une des revendications 1 à 12.

14. Système de frein d'un véhicule (10) ferroviaire ayant plusieurs dispositifs (26, 28, 30, 32, 34, 36) de frein et un dispositif (40) de régulation de frein suivant la revendication 13.

15. Véhicule (10) ferroviaire ayant un système de frein suivant la revendication 14.
